# EUROPEAN PATENT SPECIFICATION

(11) **EP 1 851 105 B1**
(45) Date of publication and mention of the grant of the patent: **23.12.2009**
(21) Application number: 06711414.0
(22) Date of filing: 06.02.2006
(51) Int. Cl.: B62M 9/12, B62M 9/04

(54) **TRANSMISSION CASE FOR BICYCLES**
GETRIEBEGEHÄUSE FÜR FAHRRÄDER
CARTER DE TRANSMISSION POUR BICYCLETTES

(30) Priority: 16.02.2005 IT RM20050065
(43) Date of publication of application: 07.11.2007
(73) Proprietor: Cappellini, Daniele, 00010 Sant'Angelo Romano (RM) (IT)
(72) Inventor: Cappellini, Daniele, 00010 Sant'Angelo Romano (RM) (IT)
(86) International application number: PCT/IT2006/000060
(87) International publication number: WO 2006/087750

(56) References cited:
- EP-A- 1 418 120
- CH-A- 128 353
- DE-A1- 4 129 198
- DE-C1- 3 908 385
- GB-A- 444 433
- US-A- 5 553 510
- US-A1- 2004 014 543

## Description

The Derailleur Case For Bicycles is a transmission system for bicycles, especially for off road performances and particularly to be used on mountain bikes. The aim of this invention is to reduce the transmission dimensions so as to insert all the components in a case or in the bicycle frame, to protect it from impurities and impacts. The principal components of The Derailleur Case For Bicycles is the primary cog set (2), the secondary cog set (3) and the derailleur (1). The suitably innovative derailleur is located between the primary and secondary cog sets and linked to a twist shifter (53) on the handlebar by means of a system of gear cables (45) and cable housing (46). When the biker operates on the twist shifter (53), the derailleur (1) moves sideways (A) on the proper upper and lower slide (37) (38) together with the primary looping ring roller chain (8), which moves on the cog sets, determining the gear ratio change and consequently the relative variation of revolutions between the rear wheel and the crankshaft. With the shifting (A) the primary roller chain (8) is always parallel to the longitudinal axis (64) of the bicycle and the derailleur (1) never touches the cog sets. The peculiar position of the cog sets enables the variation of revolutions during the chain shifting (A). The primary and secondary cog sets (2) (3) are assembled with the parallel rotation axis but on the other way around so that the big diameter cog of the primary cog set is on the left, and the small diameter cog of secondary cog set is on the same side. The primary cog set (2) is assembled on the primary axle (9) which the crank-arm (12) is fixed to and linked to the secondary cog set (3) by means of the primary roller chain (8). The secondary cog set (3) is assembled on the secondary axle (10) on the right side of which is fixed an outboard chain ring (15) outside the gear box, which, by means of a secondary roller chain (17) is linked to the cog (18) of the secondary transmission on the rear wheel hub. When the primary roller chain (8) is positioned between the single small diameter primary cog and the single big secondary cog, the speed is slower. When the chain is on the cogs with exactly the same diameter, positioned in the middle of the cog sets, the number of revolutions of the primary axle (9) and that that of the secondary axle (10) is the same. The fastest speed is obtained when the primary roller chain (8) is positioned on the primary big diameter cog of the primary cog set and the small diameter cog of the secondary cog set. The primary and the secondary cog sets (2) (3) have exactly the same numbers of cogs, thus, determining the numbers of gears. A floating derailleur pulley (22) and a couple of rollers, right and left, (30) (31) are the components of the derailleur that shift the chain. Two springs (23) are fixed on the hub (24) of the floating derailleur pulley (22) that runs on two slots in order to tighten the primary roller chain (8) and to compensate the difference of the cog diameters during gear changing. So the floating derailleur pulley (22) has a double function: to shift the primary roller chain (8), and to tighten it. When the floating derailleur pulley (22) moves the primary roller chain (8) to the left on the secondary cog set (3), a longer ratio gear is inserted; on the contrary, when the floating derailleur pulley is moved to the right, a shorter ratio gear is inserted. A non-floating derailleur pulley (19) of the derailleur (1) drives the primary roller chain (8) out of the primary cog set (2). The right and left side rollers (30) (31), on the lower part of the front derailleur (1), shift the primary roller chain onto the primary cog set (2). They rotate on two different axles (32) (33), the right side roller and the left side roller, so as to avoid any friction generated by the primary roller chain (8), that runs between them when the gears are changed. A longer ratio gear is inserted when The right side roller (30), pushes the primary roller chain (8) to the left; whereas, a shorter ratio gear is inserted when the left side roller (31) pushes the primary roller chain (8) to the right. The floating derailleur pulley (22), the right and the left side rollers (30) (31),being part of the derailleur(1), are always lined up to the bicycle axis (64) and the primary chain (8) moves sideways (A), when the gears are changed on the primary (2) and secondary (3) cog sets at the same time.

### TECHNICAL FIELD

In short, The Derailleur Case For Bicycles is composed of two cog sets assembled, on the other way around with a parallel rotation axle, but assembled in the opposite way so that the big diameter cog located on the primary cog set, corresponds to the small cog of the secondary cog set. The number of cogs for each cog set determines the numbers of the gears that are available. The peculiar derailleur runs on the cogs axles, enabling the roller chain of the primary transmission to shift sideways from the primary and secondary cog set and the gear changing, too and so, the variation of the rotations of the primary and secondary axles, where an outboard chain ring, is linked by a second chain to the cog of the rear wheel hub. This light and slightly smaller Derailleur Case For Bicycles has been specifically invented for its use on off road excursions, with its components closed in a boxed or a framed box, which is particularly suitable for all kinds of mountain bikes, where mud, dust and accidental impacts make the traditional parallelogram transmission systems extremely vulnerable. The Derailleur Case for Bicycles has the same ratio gears of a common mountain bike, with the outboard chain ring and the cog of the secondary transmission that can be freely personalized and used for all bike disciplines. The same bike can be used for downhill purposes, where it is necessary to have very long ratio gears compared to cross country, simply changing the cog on the secondary transmission hub. Furthermore, in downhill and free ride excursions, the rear tail has reached the same vibrations as those of motor-cycles, which, due to high speed, cause vibrations and to-and-fro movements, damaging its functionality and jeopardizing its durability. Thanks to the invention, mentioned above, the possibility of changing gears just by using a twist shifter positioned on the handlebar, it makes it easier for the everyday use of city bikes, too.

### BACKGROUND ART

The majority of transmission devices for bicycles on sale nowadays, are essentially of two kinds: the traditional front and rear parallelogram derailleur with their mechanism completely open and exposed; and the protected boxed gearing. The gearing devices are assembled on the hub between the rear cog set and the wheel, and it is possible to change gears through a cable that operates on the inner mechanism of the hub. The traditional devices, which are certainly most commonly diffused, are composed of two derailleurs, one in front, the other on the rear, that operate through cables linked to the twist shifters on the handlebar. Thanks to the derailleurs, the chain can move on the rear cog set of the rear hub, and on the ring gears of crank-arm, modifying the revolution rotation, thus obtaining the desired gear.

EP 1 630 092 is a prior art document according to Article 54(3) EPC and discloses a transmission for bicycles including an input cog assembly mounted to an input shaft and an output cog assembly mounted to an output shaft. A chain links a pair of input and output cogs for transmitting power from the input cog assembly to the output cog assembly. The chain, in operation, has a high-tension side and a low-tension side. A derailleur is engageable with the low-tension side of the chain to laterally urge the chain from a current output cog to a destination output cog. In EP 1 630 092 the derailleur is not positioned between input and output cog assemblies.

Document US 2004/0014543 discloses a transmission case for bicycles according to the preamble of claim 1.

### DISCLOSURE OF THE INVENTION

The Derailleur Case for Bicycles is completely different from the traditional one because it does not include the same elements that characterize the traditional system, such as: the chain cage pivot, the front and the rear derailleurs for the cog set on rear wheel. Whereas, in the new invention, mentioned above, we have the gear changing inside a case, which protects all the components of the system from mud and accidental collisions. The case can be obtained by two parallel and longitudinal plates, one on the right (57), the other on the left (58), where the bearing housing, the axles holes, the frame supports and etc... are located in. The devices in-between the two plates are closed in an easy removable plastic case that is divided into two parts (60) (61); a very small door (62), positioned on the lower part of the gear box, makes it easier to test and to lubrificate it. You can exploit the box by putting it in the bike frame assembling all the components into it, or, just by leaving its components exposed for no off road purposes. Externally, on the right side of the gear box, there is the secondary transmission composed of an outboard chain ring (15) and a secondary roller chain (17) linked to the rear cog (18) assembled on the rear wheel of the bike (63). The biker is completely free to choose the diameter and the numbers of teeth on the cogs of the secondary transmission, both to adjust the gear for the variety of its use so as to obtain the best performances of the bike. Changing gears generate a changing in the revolution between the primary axle (9) and the secondary axle (10) linked to the rear wheel through the secondary transmission, allowing the user to go up and down like a common mountain bike. The result of the percentage increase during the changing gears is always correct just by a twist shifter (53). So, it's not possible, as in the traditional bicycle system, to make any mistakes. In the above- mentioned invention, the gears are changed with only one twist shifter (53) on the handlebar, that operates on the derailleur (1), specifically realized for this purpose, which, moved sideways and running on the slides (37) (38), shifts the primary looping ring roller chain (8) between the primary (2) and secondary cog sets (3), oppositely set the parallel rotation axles. So, it is the particular position of the primary and secondary cog sets (2) (3) which renders it possible to obtain a revolution changing between the primary and secondary axles. The derailleur (1) has been projected to move the primary chain (8) on the primary and secondary cog sets at the same time. The components of the derailleur that shift the chain are: the floating derailleur pulley (22) that drives the chain on the secondary cog set (3), and a couple of rollers (30) (31) that drive the chain an the primary cog set (2). The floating pulley (22) tightens the primary chain with two springs (35), so it is possible to compensate the difference of the cogs' diameter during gears changing. A non-floating derailleur pulley (19) drives the chain out the primary cog set (2). The non-floating pulley is adjustable and it is possible to move it for a bit of millimetres on a small slot (21), compensating for the extension of the chain, due to its wear. The primary cog set (2) is assembled on the pedal axle called primary axle (9). The secondary cog set (3) derives its movement from the primary cog set (2) by means of the primary chain (8); the outboard chain (15) is assembled on the right side of its axle, called secondary axle (10). By means of the secondary chain (17), the outboard chain (15) activates the rear cog (18) of the secondary transmission assembled on the rear wheel hub of the bike (63). The primary and secondary cog sets have the same number of cogs, which is equivalent to the number of gears available. Thanks to its particular structure, The Derailleur Case For Bicycles allows a very quick changing of gears, compared to the traditional gear, because just with a twist shifter, the chain takes less time to move up and down the cogs. As far as the above mentioned invention is concerned, there is neither the front nor the rear derailleur as in traditional gears, which have to be synchronized by the biker to avoid the drop-out of the chain. Furthermore, with this system, the time employed for the chain to pass from the longer to the shorter gear ratio is shorter, because, thanks to the pulley, the primary chain does not shift from its housing and during gear changing, the two derailleur sliding blocks that drive it keep it in line with the cogs. At the same time, the derailleur in The Derailleur Case For Bicycles is an integrated device and independent from the other components as the primary and the secondary cog sets, and is linked to them just by means of the primary chain.

### BRIEF DESCRIPTION OF DRAWINGS

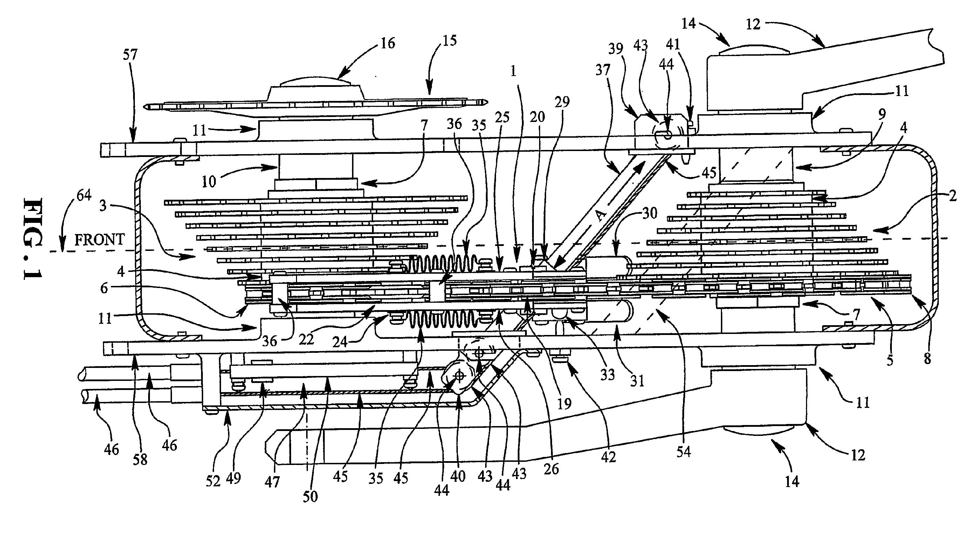

FIG. 1 - The box of the Derailleur Case For Bicycle, as seen from the upper side when it is open, with the drawings of all its inner devices. The derailleur (1) that shifts to (A) is, and represented, on the left side of the longer gear ratio, the anti chain suck (54) device of the primary roller chain (8) is represented with a broken line. The bicycle axis (64), is also represented.

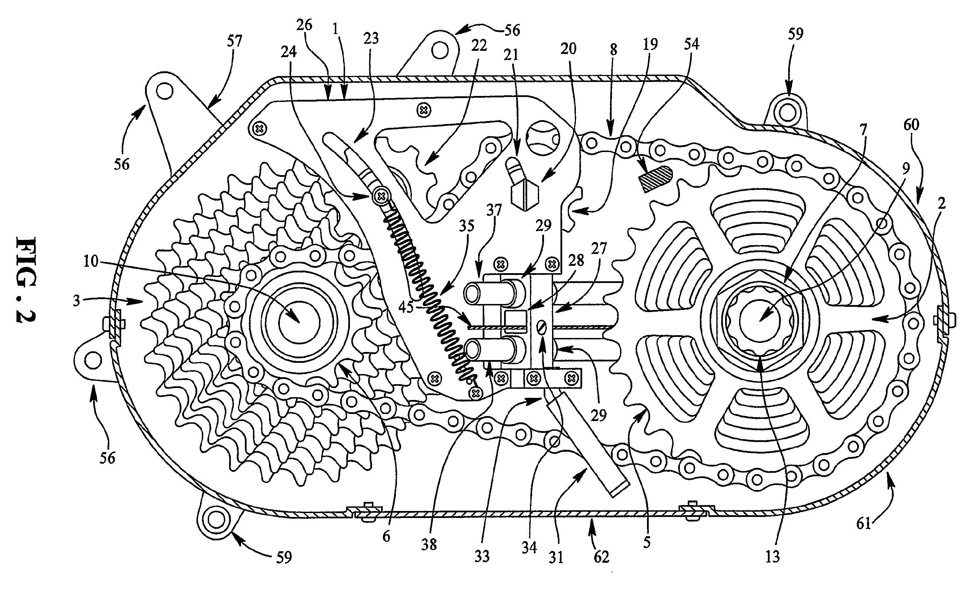

FIG. 2 - The left side of The Derailleur Case For Bicycle, as seen when it is open with the drawings of all its inner components.

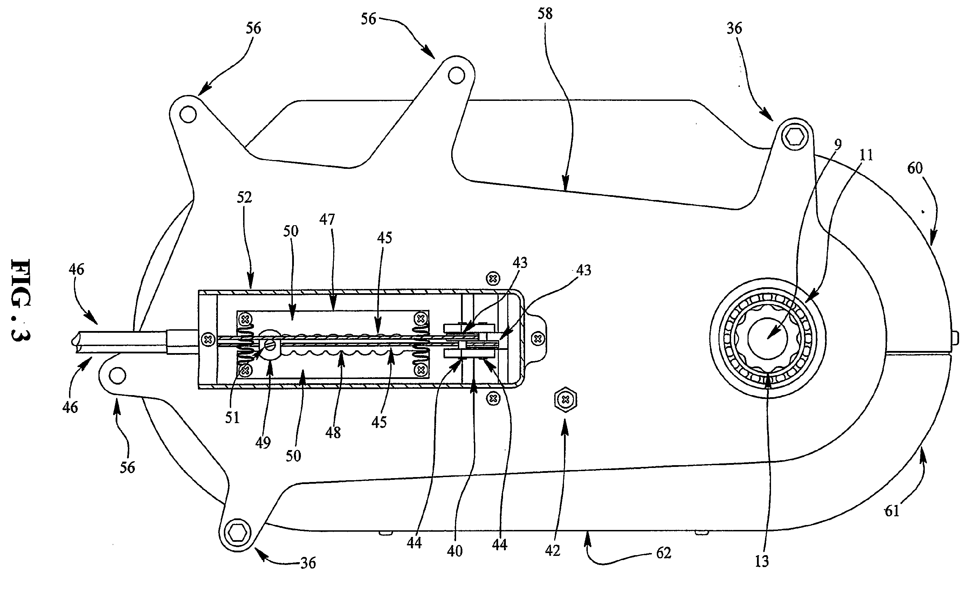

FIG. 3 - The left side of The Derailleur Case For Bicycles, as seen when it is closed with the drawings of all its external elements. The components of the gear selector (47), the gear cable (45), the gear cable pulley (43) are pointed out. The crank-arm (12) is not drawn so as to point out the crank-arm spline (13) design on the primary axle (9) and the bearing (11).

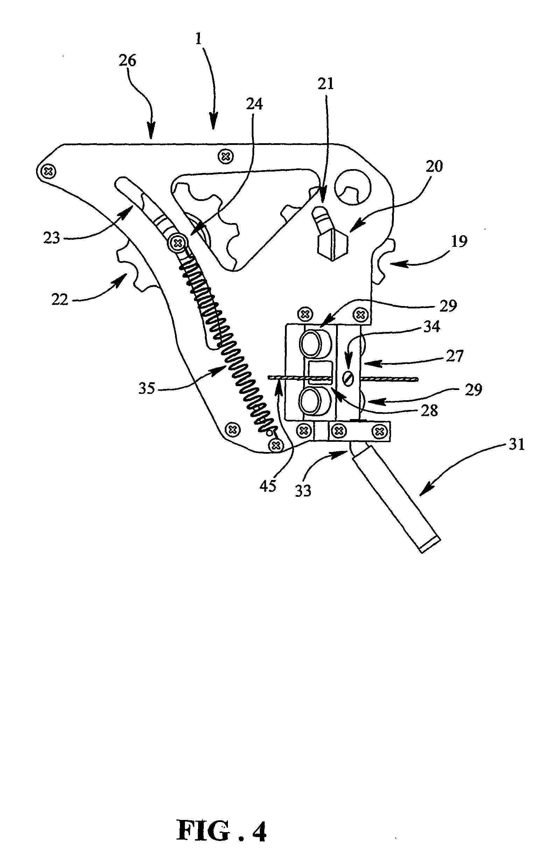

FIG. 4 - Left side drawing of the derailleur (1) completed assembled and separated from the other elements.

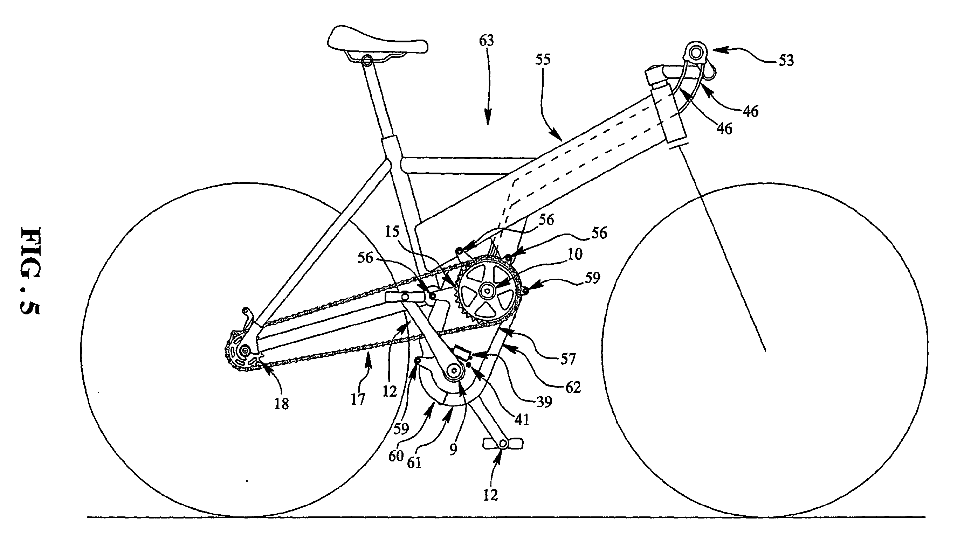

FIG. 5 - Drawing of the right side of a bicycle (63), showing The Derailleur Case For Bicycles on a frame (55).

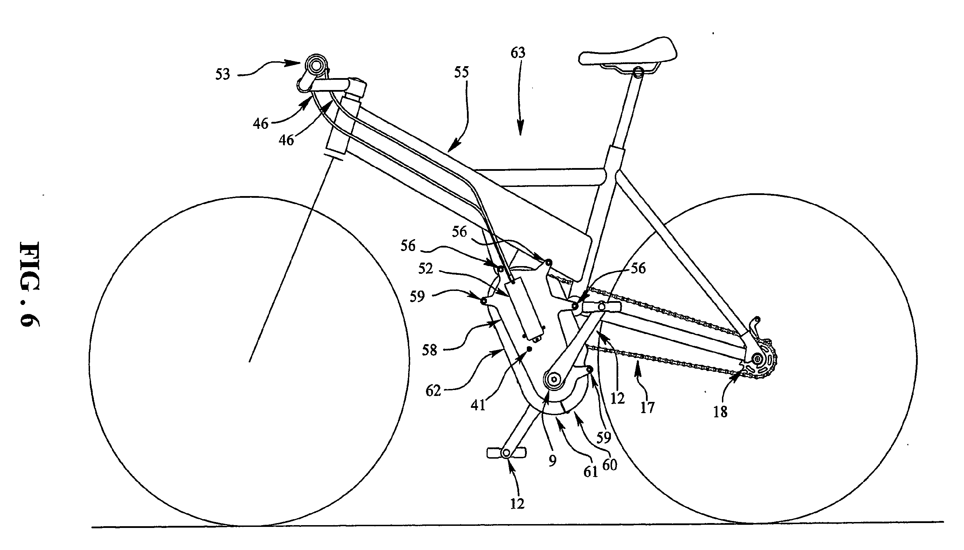

FIG. 6 - Drawing of the left side of a bicycle (63)

### BEST MODE FOR CARRYING OUT THE INVENTION

The invention is now described according to the inventor's favourite realization at the moment and is described just for illustrative purposes, and not strictly limited to, or restricted to the enclosed illustrations.
COG SETS. According to the above mentioned invention, the primary and secondary cog sets (2) (3) are composed of a series of interchangeable cogs with a progressive number of their teeth, ex.: 12 - 14 - 16 etc..., that assembled in an increasing order and suitably spaced thanks to proper cog spacer (4), form a frustum of cone.
The primary and secondary cog sets are both assembled with the same numbers of cogs, determining the number of gears available. The gear change is obtainable for the peculiar position of the two cog sets, as regards to the position of the derailleur (1) that have their rotation primary cog set parallel but assembled on the other way around and much closer so that the big diameter left cog (5) corresponds to the small diameter left cog (6) located on the secondary cog set. All the cogs can be changed to have different useful gear ratios. The number of gears and the number of the cogs of each cog set can be personally adapted.
DERAILLEUR. The most innovative device of The Derailleur Case For Bicycles is the derailleur (1) that moving on (A), pushes a circular roller chain called primary looping ring roller chain (8) sideways, from the primary and secondary cog sets to the couple of cog sets on its side. The right (25) and left (26) side derailleur cages and the axles of the right (32) and left (33) side rollers are attached to the derailleur body (27), which is provided with two precision bushings (29) that let it run on the upper and lower slides (37) (38) made of two refaced steel tubes laid one on top of the other.
RIGHT AND LEFT SIDE ROLLERS. Totally agreeing with the present invention at the bottom of the rear part of the derailleur body (27), there are two steel axles (32) (33), that support the right and left side rollers (30) (31) which are almost in vertical position and parallel and shift the primary roller chain (8) sideways, implementing the changing of the gear ratio on the primary cog set (2). The rollers, rotating on the axles (32) (33) of the right and left side rollers, reduce the friction on the primary roller chain, running between them during the gear changing.
DERAILEUR CAGES. On the left and right side of the specular derailleur cages (25) (26) there are the slots (23) of the floating pulley (22) and the adjusting slots (21) of the non-floating derailleur pulley (19); the two pulleys, between the two cages, are separated with specific spacers (36) fixed on them. Outside the cages (25) (26), two chain tensioner springs are fixed. The derailleur body is fixed by holes on the cages.
NON-FLOATING DERAILLEUR PULLEY. According to the previous description, the non-floating derailleur pulley (19) drives the primary roller chain (8) out of the primary cog set (2), which is situated on the upper part of the derailleur between the cages, and is assembled between the primary cog set and the floating pulley. By means of the non-floating pulley, it is possible to adjust the tension of the primary chain moving it onto the proper slot (21) and fixing it after the adjustment with the pulley fixing bolt (20). Thanks to this, it is possible to compensate the natural stretch of the chain, due to its constant use.
FLOATING DERAILLEUR PULLEY. According to the description previously described, in the lower part of the derailleur, between the left and right cages (25) (26), there is the floating pulley (22) that moves the primary roller chain (8) sideways, changing the gear ratio on the secondary cog set (3). The floating derailleur pulley is a fundamental part of the chain puller.
CHAIN TENSIONER. According to the previous description, on the front side of the right and left derailleur cages (25) (26), there are two carved slots (23) that drive the floating pulley (22) where the primary roller chain (8) runs on. Two springs (35) are fixed between the lower edge of the slots (23) and the hub (24) of the floating pulley (22) so as to ensure the tension of the primary chain, with the aim of compensating the difference of the cog diameter during the gear change.
DERALLIEUR BODY. According to the above mentioned invention, the derailleur body (27) supports the principal elements of its mechanism; there are the two precision bushings (29) on it, by means of which it moves (A) onto the upper and lower slides (37) (38), eliminating any slacks that can cause damage during gear change. In the middle of the body, between the bushings, placed on top of the another, there is a slot (28) for the gear cable (45) which is fixed on the rear of the body with a cable fixing bolt (34). The precision bushings (29), lean towards the upper and lower slides (37) (38) so as to have the derailleur on the same line of the bicycle axis (64) when it shifts (A) for the change of gears.
UPPER AND LOWER SLIDES. Completely according to the previous description, the derailleur body runs on two steel slides, an upper and a lower one (37) (38), obtained from two refaced tubes, which are laid one over the other and are parallel to the horizontal plain and lean so much so that the derailleur (1) is always in line to the bicycle axis (64) maintaining the floating pulley (22) and the right and left side rollers (30) (31), that shift the primary roller chain (8), always at the proper distance from the cogs.

RIGHT AND LEFT SLIDE BOXES. According to the previous description, the slide boxes (39) (40) are firmly fixed to the right and left side of the gear-box plates (57) (58), and three gear cable pulleys (43) are also fixed on them with the axles (44), that make the gear cables (45) move back and forth ; the extremities of the upper and lower slides (37) (38) are housed in four dead holes, two on the right side and the other two on the left side of the right and left slide boxes (39) (40).
DERAILLEUR TRAVEL ADJUSTER. Completely agreeing with the previous description, the left and the right side travel adjusters (41) (42) allow the adjustment of the derailleur (1); the two adjusters are fixed into two holes on the right and on the left side of gear-box plates (57) (58).
PRIMARY AND SECONDARY AXLES. Completely agreeing to the invention previously described, the primary axle starts its motion from the crank-arm (12) positioned in the crank-arms (13) that holds the primary cog set (2) assembled on the fitting in the centre of the axle where it is fixed through a cog set lock-nut (7). On the primary cog set sides, there are the bearing (11) seats on the axle. The secondary axle (10) starts its motion from the primary looping ring roller chain (8) and holds the secondary cog set (3) assembled on the fitting in the central zone and fixed with a lock-nut (7). On the right side of the secondary axle there is the fitting for the outboard chain ring (15) of the secondary transmission; on the secondary cog set sides there are the bearing (11) seats on the axle. At the ends of both the hollow axis, there are the fittings (14) for the crank-arm fixing bolt and for the outboard chain ring (15).
SECONDARY TRANSMISSION. Completely agreeing with the previous description, the secondary transmission is composed of the outboard chain ring (15), the secondary roller chain (17) and the rear cog (18) positioned on the rear wheel of the bicycle (63). Both the diameter of cogs and the teeth of the secondary transmission can be freely changed according to the bikers' purposes.

GEAR SELECTOR. As completely agreed with the description of the above-mentioned invention, the gear selector (47) stops the derailleur exactly on the gear chosen by the user; besides, a click is heard, indicating that a new gear is engaged . The selector is composed of two parallel slides (50) with a spacing (48) for each gear. The gear selector slider runs (49) between the slides (50) that when it is shifted on the spacing (48), causes a click. The gear cable (45) is fixed to the selector with a fixing bolt (51) that moves together with the derailleur (1). The selector is adjustable in order to have a perfect balance of the derailleur near the cog sets.
TWIST SHIFTER. In fully agreement with the previous description, the twist shifter (53) positioned on the handle bar, by means of a cable gear (45) and two back and forth sheaths (46) linked to the derailleur (1) that, running on (A) the upper and lower slides (37) (38) engages the gears. On the twist shifter (53) we can read the corresponding number of gears and we can also find the cable tension adjusters. The gear cable (45) is closed as a ring into the twist shifter (53) and is attached to its ends with two screw clamps.
GEAR CABLE PULLEYS. Fully agreed with the previous description, three small pulleys (43) drive the gear steel cable (45) inside the gear box so that the derailleur moves from right to left, without using a return spring. The pulleys are assembled on two axles (44) and vertically assembled in the housing holders of the derailleur runner slides. The cables are protected with usual bicycles housings (46).
GEAR BOX. Completely agreeing with the previous description, the gear box of this invention, can be easily dismantled, varied and adjusted for a possible installation on different types of bicycle frames. The gear box can generally, be made in two aluminium plates, spaced in a parallel way on the right and left side (57) (58), supporting all the mechanic devices. Between the plates, there are the bearing seats (11), the holes for the primary and secondary axles, the seats, supporting the upper and lower slide boxes the holes for the left and right side travel adjuster and the frame gear box fixing. The second part of the gear box is made of plastic, and is realized, in order to ensure the perfect closing of the open spaces between the two plates (57) (58) and is composed of the upper and lower part (60) (61) that can be easily dismantled; on the lower part there is a maintaining cover (62).
ANTI CHAIN-SUCK. In perfect agreement with the previous description, the anti chain-suck (54) prevents the primary roller chain to get stuck to the teeth of the primary cog set, thus hitting and damaging the derailleur. The anti chain-suck device is made of hard steel and is located between the primary axle and the derailleur (1) rear side.
NUMBER OF GEARS. For a better explanation of this invention, each cog of the cog set is interchangeable so as to obtain different useful gear ratios whose numbers can vary and determine the number of gears available, as for example: seven for the downhill, eight or nine for the city bikes and eleven for the cross country. The primary and secondary cog sets, both of them rotating, have always the same number of cogs. In the present drawings, the version with nine gears has been chosen just for its major simplicity of the diagram.

### INDUSTRIAL APLICABILITY

The Derailleur Case For Bicycles, which is light and of a small dimension, is particularly suitable in the cycling field, especially for mountain bikes, because it can be assembled inside a boxed frame, or in a small box protecting it from mud and dust. Considering the versatility of this transmission system, it enables a mountain bike to vary the ratio gears of the secondary transmission, simply by changing the diameter of the cog set on the rear wheel hub. The Derailleur Case For Bicycles is suitable for all kinds of bicycle frames, including downhill and free ride frames, and for all cycling disciplines. For its use in the industrial field, we have a multiplier and revolution reducer with more gears: nine, ten or more, because its number is limited to the available space.

## Claims

1. A transmission case for bicycles, comprising a secondary axle (10) supporting a secondary cog set (3) and a chain ring (15), said chain ring (15) being disposed outside the transmission case and connectable to a rear wheel of the bicycle by means of a secondary roller chain (17), a primary axle (9) of the crankshaft supporting a primary cog set (2) linked to the secondary cog set (3) by means of a primary looping ring roller chain (8), said primary and secondary axles being parallel to each other said transmission case further comprising a derailleur (1) being positioned between primary and secondary cog sets (2,3) and externally operated and adapted to shift the primary looping ring roller chain (8) on the cog sets (2, 3), for performing a gear change, **characterized by** the fact that the cogs have different diameters and are arranged in inverse order with respect to each other, in such a manner that the maximum diameter cog (5) of the primary cog set (2) corresponds to minimum diameter cog (6) of the secondary cog set (3).

2. The transmission case for bicycles according to claim 1, wherein there are provided upper and lower slides (37, 38) that are arranged diagonally with respect to the derailleur (1) and with respect to the longitudinal bicycle axis (64), wherein the derailleur (1), is adapted to slide on said slides (37, 38) whereby the primary looping ring roller chain (8) shifts on both cog sets (2, 3).

3. The transmission case for bicycles according to claim 2, wherein the derailleur comprises means that brings into effect a gear changing of the primary looping ring roller chain (8) on the primary cog set (2) in the form of right roller (30) and a left roller (31), which, by pushing the primary looping ring roller chain (8) makes it possible to engage higher and lower gears.

4. The transmission case for bicycles according to claim 2, wherein the derailleur comprises means which brings into effect the gear changing of the primary looping ring roller chain (8) on the secondary cog set (3) in the form of a floating pulley (22) on which the primary looping ring roller chain (8) runs, the floating pulley (22) being between right and left side cages (25, 26) of the derailleur.

5. The transmission case for bicycles according to claim 2, wherein the derailleur (1) comprises means that drives the primary looping ring roller chain (8) out of the primary cog set (2) in the form of a non-floating pulley (19), which is assembled on the upper side between the left and right side of the derailleur cages (25, 26) exactly between the primary cog set (2) and the floating pulley (22).

6. The transmission case for bicycles according to claim 5, wherein the non-floating pulley (19) is shiftably mounted in a slot (21) and fixable therein by a fixing bolt (20) as soon as its adjustment is finished.

7. The transmission case for bicycles according to claims 4 , wherein the chain pulley (22) is spring-charged mountedslidably in two slots (23) in the cages (25, 26).

8. The transmission case for bicycles according to claim 2, wherein the derailleur (1) comprises a derailleur body (27) slidable by means of bushings (29) on the upper and lower slides (37,38) in an inclined position so that the derailleur is parallel to the bicycle axis (64).

9. The transmission case for bicycles according to claim 8, wherein the derailleur body (27) has fixed thereto a twist shifter cable (45) with a cable bolt (34), the right and left side cages (25, 26), right and left side roller axles (32,33), between the two bushings (29) in the derailleur body (27) there being a slot (28) for the twist shifter cable (45).

10. The transmission case for bicycles according to claim 3, wherein both upper and lower slides (37,38) are made of two refaced steel tubes, lying one on the top of the other and parallel to the horizontal plane, and being inclined towards the bicycle axis (64) so as to maintain the derailleur (1), the floating pulley (22) and the left and right side rollers (30, 31) always at the same distance from the cogs.

11. The transmission case for bicycles according to claim 9, wherein a gear selector (47) is located on the front side of the transmission case to the left hand so that the derailleur (1) corresponds to the single cogs of the chosen gear; the gear selector (47) being composed of two parallel ways (50) provided with spacers (48) and a slider (49) fixed to the gear cable (45) by means of a fixing bolt (51); the slider (49) shifting on the spacers (48) and giving the biker the sensation of the gear change by the click on a twist shifter (53).

12. The transmission case for bicycles according to claim 1, wherein there is an anti chain-suck means (54) in the transmission case that prevents the primary looping ring roller chain (8) from the damage of the derailleur (1) in case the chain is embedded in the primary cog set (2) and dragged inside it; the anti-suck means (54) being an aluminium plate shaped in a way so that the primary looping ring roller chain (8) has not enough space to be in contact with the derailleur (1).

## Patentansprüche

1. Ein Getriebegehäuse für Fahrräder, mit einer einen sekundären Zahnkranzsatz (3) und einen Kettenring (15) tragende sekundäre Achse (10) wobei der genannte Kettenring außerhalb des Getriebegehäuses angeordnet und über eine sekundäre Rollerkette (17) mit einem Hinterrad des Fahrrads verbindbar ist, und einer einen primären Zahnkranzsatz (2) tragende, primäre Achse (9) der Kurbelwelle, die mit dem sekundären Zahnkranzsatz (3) über eine primäre Umlenkring-Rollenkette (8) verbunden ist, wobei die genannten primären und sekundären Achsen parallel zueinander stehen und das genannte Getriebegehäuse weiterhin einen zwischen dem primären und sekundären Zahnkranzsätzen (2, 3) gelegenen Kettenschalter (1) umfasst, der von außen betätigt und angepasst ist, um die primäre Umlenkring-Rollenkette (8) auf die Zahnkränze (2, 3) zu übertragen und somit eine Getriebeumschaltung zu erreichen, **dadurch gekennzeichnet dass** die Zahnkränze verschiedene Durchmesser haben und in umgekehrter Ordnung zueinander stehen, sodass der Zahnkranz mit dem größtem Durchmesser (5) des primären Zahnkranzsatzes (2) dem Zahnkranz mit dem größten Durchmesser (6) des sekundären Zahnkranzsatzes (3) entspricht.

2. Das Getriebegehäuse für Fahrräder nach Anspruch 1, worin obere und untere Rutschflächen (37, 38) vorgesehen sind, die dem Kettenschalter (1) und der längsgerichteten Fahrradachse (64) diagonal gegenüberstehen, wobei der Kettenschalter (1) für ein Abgleiten an die genannten Gleitflächen (37, 38) angepasst ist und die primäre Umlenkring-Rollenkette (8) sich auf beide Zahnkranzsätze (2, 3) verschiebt.

3. Das Getriebegehäuse für Fahrräder nach Anspruch 2, worin der Kettenschalter eine Vorrichtung umfasst, die eine Getriebeumschaltung der primären Umlenkring-Rollenkette (8) auf den primären Zahnkranzsatz (2) in der Form eines rechten Rollers (30) und eines linken Rollers (31) bewirkt, und es durch einen Schub auf die primäre Umlenkring-Rollenkette (8) ermöglicht, höhere und niedrigere Getriebe in Eingriff zu bringen.

4. Das Getriebegehäuse für Fahrräder nach Anspruch 2, worin der Kettenschalter eine Vorrichtung umfasst, die eine Getriebeumschaltung der primären Umlenkring-Rollenkette (8) auf den sekundären Zahnkranzsatz (3) in der Form einer frei schwebenden Scheibe (22) bewirkt, über welche die primäre Umlenkring-Rollenkette (8) läuft, wobei sich die frei schwebende Scheibe (22) zwischen dem rechten und linken Seitenkäfig (25, 26) des Kettenschalter befindet.

5. Das Getriebegehäuse für Fahrräder nach Anspruch 2, worin der Kettenschalter (1) eine Vorrichtung umfasst, die die primäre Umlenkring-Rollenkette (8) aus dem primären Zahnkranzsatz (2) in der Form einer nicht frei schwebenden Scheibe (19) abhebt, die an der Oberseite zwischen der linken und rechten Seite der Kettenschalter-Käfige (25, 26) genau zwischen dem primären Zahnkranzsatz (2) und der frei schwebenden Scheibe (22) montiert ist.

6. Das Getriebegehäuse für Fahrräder nach Anspruch 5, worin die frei schwebende Scheibe (19) in einem Schlitz (21) beweglich montiert ist und darin über einen Befestigungsbolzen (20) festgehalten werden kann, sobald die Einstellung beendet ist.

7. Das Getriebegehäuse für Fahrräder nach Anspruch 4, worin die Kettenscheibe (22) unter Federbelastung in zwei Schlitzen (23) in den Käfigen (25, 26) beweglich montiert ist.

8. Das Getriebegehäuse für Fahrräder nach Anspruch 2, worin der Kettenschalter (1) einen Kettenschalter-Körper (27) umfasst, der über Hülsen (29) an den oberen und unteren Gleitflächen (37, 38) in eine geneigte Stellung bewegt werden kann, sodass der Kettenschalter zur Fahrradachse (64) parallel steht.

9. Das Getriebegehäuse für Fahrräder nach Anspruch 8, worin der Kettenschalter-Körper (27) mit einem Drehumschaltungskabel (45) über einen Kabelbolzen (34) verbunden ist, um den rechten und linken Seitenkäfig (25, 26) und die rechte und linke Rollerachse (32, 33) zu bewegen, wobei zwischen den zwei Hülsen (29) im Kettenschalter-Körper (27) ein Schlitz (28) für das Drehumschaltungskabel (45) vorgesehen ist.

10. Das Getriebegehäuse für Fahrräder nach Anspruch 3, worin die zwei oberen und unteren Gleitfläche (37, 38) aus zwei geschliffenen, übereinander und parallel zur horizontalen Ebene stehenden und zur Fahrradachse (64) hin geneigten Stahlrohren bestehen, um dadurch den Kettenschalter (1), die frei schwebende Scheibe (22) und die rechte und linke Seitenrolle (30, 31) immer im selben Abstand zu den Zahnkränzen zu halten.

11. Das Getriebegehäuse für Fahrräder nach Anspruch 9, worin ein Getriebeschalter (47) links an der Vorderseite des Getriebegehäuses angebracht ist, sodass der Kettenschalter (1) den einzelnen Zahnkränzen des gewählten Getriebes entspricht; wobei der Getriebeschalter (47) aus zwei parallelen, mit Abstandhaltern (48) versehenen Führungen und einem am Schaltkabel (45) über einen Befestigungsbolzen (51) befestigten Gleitschlitten (49) besteht; und der Gleitschlitten (49) auf den Abstandhaltern (48) gleitet und dem Fahrradfahrer durch ein Klicken am Drehschalter (53) das Gefühl einer Getriebeumschaltung vermittelt.

12. Das Getriebegehäuse für Fahrräder nach Anspruch 1, worin im Getriebegehäuse eine Vorrichtung zur Kettenanzugs-Schutzvorrichtung (54) vorgesehen ist, die die primäre Umlenkring-Rollerkette (8) an einer Beschädigung des Kettenschalter (1) hindert, falls sich die Kette in den primären Zahnkranzsatz (2) einbettet und von diesem mitgeschleppt wird; die Kettenanzugs-Schutzvorrichtung (54) ist eine derart geformte AluminiumPlatte, dass die primäre Umlenkring-Rollerkette (8) nicht genügend Raum findet, um mit dem Kettenschalter (1) in Berührung zu treten.

## Revendications

1. Carter de transmission pour bicyclettes, comprenant un axe secondaire (10) supportant un jeu de pignons secondaire (3) et un plateau (15). Ledit plateau (15) est placé en dehors du carter de transmission et peut être raccordé à une roue arrière de la bicyclette au moyen d'une chaîne secondaire (17) et de l'axe primaire (9) du pédalier supportant un jeu de pignons primaire (2), ce dernier étant relié au jeu de pignons secondaire (3) au moyen d'une chaîne primaire à maillons en boucle (8). Lesdits axes primaire et secondaire sont parallèles l'un à l'autre. Ledit carter de transmission, comprenant également un dérailleur (1) placé entre les jeux de pignons primaire et secondaire (2,3), est commandé depuis l'extérieur et sert à déplacer la chaîne primaire à maillons en boucle (8) sur les jeux de pignons (2, 3), afin d'effectuer un changement de vitesses, lequel est **caractérisé en ce que** les pignons ont différents diamètres et sont placés en ordre inverse par rapport l'un à l'autre, de manière à ce que le pignon de diamètre maximum (5) du jeu de pignons primaire (2) corresponde au pignon de diamètre minimum (6) du jeu de pignons secondaire (3).

2. Le carter de transmission pour bicyclettes selon la revendication 1 est pourvu de fourchettes guide chaîne supérieure et inférieure (37, 38) qui sont placées en diagonale par rapport au dérailleur (1) et à l'axe longitudinal de la bicyclette (64) et dans lesquelles le dérailleur (1) a été placé de manière à ce qu'il puisse glisser sur lesdites fourchettes (37, 38) par lesquelles la chaîne primaire à maillons en boucle (8) glisse sur les deux jeux de pignons (2, 3).

3. Le carter de transmission pour bicyclettes selon la revendication 2 est pourvu d'un dérailleur qui est équipé d'un dispositif servant à changer les vitesses de la chaîne primaire à maillons en boucle (8) sur le jeu de pignons primaire (2), sous la forme d'un rouleau droit (30) et d'un rouleau gauche (31), qui, en poussant la chaîne primaire à maillons en boucle (8), permet de passer les vitesses les plus élevées et les plus basses.

4. Le carter de transmission pour bicyclettes selon la revendication 2 est pourvu d'un dérailleur qui est équipé d'un dispositif servant à changer les vitesses de la chaîne primaire à maillons en boucle (8) sur le jeu de pignons secondaire (3), sous la forme d'un tendeur de chaîne (22) sur lequel tourne la chaîne primaire à maillons en boucle (8). Le tendeur de chaîne (22) se trouve entre les cages de protection des côtés droit et gauche (25, 26) du dérailleur.

5. Le carter de transmission pour bicyclettes selon la revendication 2 est pourvu d'un dérailleur (1) qui est équipé d'un dispositif qui commande la chaîne primaire à maillons en boucle (8) en dehors du jeu de pignons primaire (2), sous la forme d'un tendeur de chaîne fixe (19) qui est assemblé sur le côté supérieur entre les côtés gauche et droit des cages de dérailleur (25, 26), exactement entre le jeu de pignons primaire (2) et le tendeur de chaîne (22).

6. Dans le carter de transmission pour bicyclettes selon la revendication 5, le tendeur de chaîne (19) a été monté dans une rainure (21) de manière à pouvoir être réglé et être fixé à l'aide d'un boulon (20), et ce, une fois le réglage terminé.

7. Dans le carter de transmission pour bicyclettes selon la revendication 4, le tendeur de chaîne (22) a été monté chargé par un ressort entre deux rainures (23) dans les cages de protection (25, 26), et ce, afin de pouvoir être déplacé.

8. Dans le carter de transmission pour bicyclettes selon la revendication 2, le dérailleur (1) comprend un corps de dérailleur (27) susceptible d'être déplacé au moyen de douilles (29) sur les fourchettes guide chaîne supérieure et inférieure (37, 38) dans une position inclinée de sorte que le dérailleur soit parallèle à l'axe de la bicyclette (64).

9. Dans le carter de transmission pour bicyclettes selon la revendication 8, sur le corps du dérailleur (27) ont été fixés un câble de poignées tournantes (45) avec un boulon de câble (34), les cages des côtés droit et gauche (25, 26), les axes de rouleaux des côtés droit et gauche (32, 33) ; entre les deux douilles (29) dans le corps du dérailleur (27), est présente une rainure (28) dédiée au câble des poignées tournantes (45).

10. Dans le carter de transmission pour bicyclettes selon la revendication 3, les deux fourchettes guide chaîne supérieure et inférieure (37, 38) sont faites de deux tubes d'acier rectifié, l'un reposant sur l'autre. Ils sont parallèles au plan horizontal et sont inclinés en direction de l'axe de la bicyclette (64) de manière à ce que le dérailleur (1), le tendeur de chaîne (22) et les rouleaux des côtés gauche et droit (30, 31) demeurent toujours à la même distance des pignons.

11. Le carter de transmission pour bicyclettes selon la revendication 9 comprend un sélecteur de vitesses (47) situé à l'avant gauche du carter de transmission de manière à ce que le dérailleur (1) corresponde aux pignons individuels de la vitesse sélectionnée. Le sélecteur de vitesses (47) est composé de deux guides parallèles (50) munis de séparateurs (48) et d'un coulisseau (49) fixé au câble de vitesse (45) par un boulon (51). Ledit coulisseau (49) se déplace sur les séparateurs (48) et transmet à la bicyclette la sensation du changement de vitesses par un déclic présent sur les poignées tournantes (53).

12. Dans le carter de transmission pour bicyclettes selon la revendication 1, il a été monté un dispositif anti-coincement de la chaîne (54) afin d'empêcher la chaîne primaire à maillons en boucle (8) d'endommager le dérailleur (1) au cas où celle-ci s'enfoncerait dans le jeu de pignons primaire (2) et serait tirée vers l'intérieur. Ledit dispositif anti-coincement (54) est constitué d'une plaque d'aluminium façonnée de manière telle à ce que la chaîne primaire à maillons en boucle (8) n'ait pas assez d'espace pour entrer en contact avec le dérailleur (1).
